# EUROPÄISCHE PATENTSCHRIFT

(11) **EP 0 439 075 B1**
(45) Veröffentlichungstag und Bekanntmachung des Hinweises auf die Patenterteilung: **29.09.1993**
(21) Anmeldenummer: 91100606.2
(22) Anmeldetag: 18.01.1991
(51) Int. Cl.: A23L 1/32

(54) **Verfahren zur Entfernung von beta-Cyclodextrin aus Eigelb**
Process for separating beta-cyclodextrin from egg yolk
Procédé pour séparer la bêta-cyclodextrine du jaune d'oeuf

(30) Priorität: 20.01.1990 DE 4001611
(43) Veröffentlichungstag der Anmeldung: 31.07.1991
(73) Patentinhaber: SKW Trostberg Aktiengesellschaft, 83308 Trostberg (DE)
(72) Erfinder: Cully, Jan, Dr., W-8268 Garching/Alz (DE); Vollbrecht, Hanz-Rüdiger, Dr., W-8226 Altenmarkt (DE)
(74) Vertreter: Huber, Bernhard, Dipl.-Chem.

(56) Entgegenhaltungen:
- EP-A- 0 164 933
- EP-A- 0 256 911
- EP-A- 0 326 469
- CHEMICAL ABSTRACTS, Band 101, Nr. 1, 2. Juli 1984, Seite 256, Zusammenfassung Nr. 2898b, Columbus, Ohio, US; I. JODAL et al.: "Hydrolysis of cyclodextrin by Aspergillus oryzae alpha-amylase"
- DATENBANK WPIL/DERWENT, accession no. 87-296033 (42), 1987, Derwent Publications Ltd., London, GB; & JP-A-62208294
- Sturch/stück 36 (1984), Nr 4. S 140 -143) Hydrolysis of cyclodextrin by Aspergillus oryzae x - Angloase

## Beschreibung

Die Erfindung betrifft ein Verfahren zur Entfernung von β-Cyclodextrin aus Eigelb bzw. Eigelbplasma, welches bei der Entfernung von Cholesterin bzw. Cholesterinestern aus Eigelb mit Hilfe von β-Cyclodextrin im Eigelb zurückbleibt.

Es ist bekannt, daß erhöhte Cholesterinwerte im Blutserum des Menschen einen erhöhten Risikofaktor für Arteriosklerose bzw. einer koronaren Herzkrankheit darstellen.

Aus diesem Grund zielen Bestrebungen der Lebensmittelindustrie darauf ab, eine deutliche Reduzierung des Cholesterins bzw. der Cholesterinester in fettreichen Lebensmitteln tierischen Ursprungs vorzunehmen, wobei ein wesentliches Problem darin besteht, die sensorischen und ernährungsphysiologischen Eigenschaften der Lebensmittel bei einer solchen Behandlung weitgehend zu erhalten.

Ein relativ schonendes Verfahren zur Entfernung von Cholesterinderivaten stellt deren Komplexierung mit β-Cyclodextrin dar.

So wird beispielsweise gemäß der EP-A 0 326 469 Eigelbpulver nach dessen Homogenisierung mit Wasser 5 Stunden lang mit β-Cyclodextrin bei 40°C gerührt und die dabei gebildeten Komplexe werden durch Zentrifugation abgetrennt.

Gemäß dem Verfahren der älteren deutschen Patentanmeldung P 39 28 258.9 wird ausschließlich das Eigelbplasma, welches zuvor mit Hilfe eines emulsionsbrechenden Mittels wie Wasser durch Zentrifugation von der LDL-Granulafraktion abgetrennt wurde, mit β-Cyclodextrin versetzt. Anschließend wird das so behandelte Eigelbplasma nach dessen Abtrennung vom β-Cyclodextrin wieder mit der LDL-Granulafraktion vereinigt.

Bei diesem Verfahren läßt es sich bei den angewandten Trennmethoden (Zentrifugation, Filtration) nicht vermeiden, daß ein Teil des gelösten β-Cyclodextrins im Eigelb bzw. Eigelbplasma zurückbleibt.

Cyclodextrine (α, β, γ), die aus 6 - 8 Glukoseeinheiten bestehende ringförmige Oligosaccharide darstellen, sind nach früher bekanntgewordenen Untersuchungen toxikologisch unbedenklich. So haben z.B. Tests zur akuten Toxizität an Mäusen und Ratten bei oraler Verabreichung keinerlei Hinweise auf eine toxische Wirkung ergeben. Jedoch sind Cyclodextrine in zahlreichen Ländern bis jetzt als "food additive" nicht zugelassen.

Der Erfindung liegt daher die Aufgabe zugrunde, ein Verfahren zur Entfernung von β-Cyclodextrin aus Eigelb bzw. aus Eigelbplasma zu entwickeln, welches ohne großen technischen Aufwand eine weitgehende und selektive Entfernung von β-Cyclodextrin aus dem behandelten Eigelbmaterial ermöglicht.

Diese Aufgabe wird erfindungsgemäß dadurch gelöst, daß man das zu behandelnde Material mit α-Amylase, ausgewählt aus den durch Mikroorganismen der Gruppe Aspergillus niger, Aspergillus oryzae, Bacillus polymyxa, Bacillus coagulans sowie Flavobacterium gebildeten oder abgeleiteten α-Amylasen oder Hausschwein-Pankreas-Amylase versetzt und inkubiert.

Es hat sich nämlich überraschenderweise gezeigt, daß auf diese Weise ein praktisch vollständiger Abbau des β-Cyclodextrins im Eigelb bzw. Eigelbplasma in wirtschaftlich sinnvoller Weise erreicht werden kann. Dies war deshalb so überraschend, weil Cyclodextrine als potente Inhibitoren der α- und β-Amylasen beschrieben worden (R.J. Weselake, R.D. Hill, Cereal Chem. 60, S. 98 (1983)) und gegen die meisten α- und β-Amylasen weitgehend resistent sind. Von einigen wenigen α-Amylase-Typen wie z.B. solchen aus Bacillus polymyxa, Aspergillus oryzae oder Hausschwein-Pankreas-Amylase war zwar bekannt, daß sie in der Lage sind, Cyclodextrine zu hydrolysieren, jedoch mit geringen Geschwindigkeiten. Es war deshalb auch nicht vorhersehbar, daß diese Aktivität im Eigelb ausreichen würde, das β-Cyclodextrin relativ rasch und vollständig abzubauen.

Beim Verfahren der Erfindung wird das Ausgangsmaterial, bestehend aus Eigelb oder Eigelbplasma, welches aufgrund einer vorangehenden Behandlung mit β-Cyclodextrin üblicherweise noch einen Restgehalt von 0,1 bis 1,0 Gew.-% an β-Cyclodextrin aufweist, einer enzymatischen Behandlung unterworfen.

Zu dieser Behandlung kann das Eigelb oder Eigelbplasma als verdünnte wäßrige Lösung eingesetzt werden, wobei pro kg Eigelb z.B. 0,1 bis 2 kg Wasser im Zuge der Cholesterinentfernung zugegeben worden sind. Dann wird der pH-Wert durch Zugabe von eßbarer Säure wie z.B. Zitronensäure auf den gewünschten pH-Wert von 4,5 bis 6,0 eingestellt. Anschließend wird dem Eigelbmaterial eine α-Amylase, ausgewählt aus den durch Mikroorganismen der Gruppe Aspergillus niger, Aspergillus oryzae, Bacillus polymyxa, Bacillus coagulans sowie Flavobacterium gebildeten oder abgeleiteten α-Amylasen oder Hausschwein-Pankreas-Amylase zugesetzt und inkubiert. Die erforderliche Menge an α-Amylase richtet sich im wesentlichen nach dem Ausgangsgehalt an β-Cyclodextrin im Eigelb und beträgt in der Regel 10 bis 500 FAU pro g zu entfernendes β-Cyclodextrin. (1 FAU = Fungal α-Amylase Unit baut unter Standardbedingungen (Substrat: lösliche Stärke, Inkubationzeit 7 bis 20 Minuten, Temperatur 37°C, pH = 4,7) 5,26 g Stärke in einer Stunde ab.) Vom rein technischen Standpunkt aus kann man auch mit größeren Mengen an α-Amylase arbeiten, doch werden diese sehr schnell unwirtschaftlich, weil keine bessere Wirkung mehr damit verbunden ist. Die Inkubationsbedingungen wie Temperatur und Zeitdauer können in weiten Grenzen variiert werden, doch haben sich Temperaturen zwischen 5 bis 65°C als besonders vorteilhaft erwiesen, wobei sich Behandlungszeiten von 2 bis 50 Stunden ergeben.

Ein besonderer Vorteil des erfindungsgemäßen Verfahrens besteht darin, daß die eingesetzten Amylasen kurzzeitig auch höheren Temperaturbelastungen ausgesetzt werden können, ohne ihre enzymatische Aktivität zu verlieren. So können die Enzyme auch während der Pasteurisierung zugegeben sein, wo kurzzeitig Temperaturen bis zu 70°C vorliegen. Auf diese Weise ist eine flexible Durchführung des erfindungsgemäßen Verfahrens während der Aufbereitung des cholesterinfreien Eigelbpulvers gegeben, die vor, während oder nach der Pasteurisierung erfolgen kann. In einer bevorzugten Ausführungsform kann der enzymatische Abbau des β-Cyclodextrins auch während der Lagerung vorgenommen werden. Mit Hilfe des erfindungsgemäßen Verfahrens ist eine weitgehende Entfernung des β-Cyclodextrins möglich, wobei die Rest-Cyclodextringehalte unter einer Nachweisgrenze von < 100 ppm liegen.

Die nachfolgenden Beispiele sollen die Erfindung näher erläutern.

### Beispiel 1

1 kg vorbehandeltes Eigelb mit einem β-Cyclodextringehalt von 0,8 Gew.-% wurde mit 1 M Zitronensäure auf einen pH-Wert von 5,5 eingestellt. Anschließend wurden 1000 FAU des Enzyms des Aspergillus oryzae in Form des Handelsproduktes Fungamyl® der Firma Novo zugegeben. Nach einer zweistündigen Inkubation bei 40°C war kein β-Cyclodextrin in der Probe mehr nachweisbar. (Nachweisgrenze: 100 ppm).

### Beispiel 2

Es wurde, wie in Beispiel 1 beschrieben, 1 kg vorbehandeltes Eigelb mit 1000 FAU Fungamyl® zusammengemischt. Diese Mischung wurde dann in einem Wärmeaustauscher bei 68°C 45 Sekunden lang pasteurisiert, innerhalb von 4 Minuten auf 5°C abgekühlt und schließlich noch 8 Tage bei 5°C inkubiert. β-Cyclodextrin war in der behandelten Probe nicht mehr nachweisbar. (Nachweisgrenze: 100 ppm).

### Beispiel 3

1 kg Eigelbplasma, welches aus 1 kg Eigelb und 2 kg Wasser und Abtrennung der LDL-Granulafraktion erhalten wurde und einen β-Cyclodextringehalt von 0,3 Gew.-% aufwies, wurde wie in Beispiel 1 beschrieben bei pH = 5,5 mit 1000 FAU Fungamyl® behandelt.

Nach einer zweifachen Aufkonzentrierung des Eigelbplasmas wurde die Probe wie in Beispiel 2 beschrieben pasteurisiert und inkubiert.

β-Cyclodextrin war in der behandelten Probe nicht mehr nachweisbar. (Nachweisgrenze: 100 ppm).

### Beispiel 4

Zu 1 kg vorbehandeltem Eigelb mit einem β-Cyclodextringehalt von 0,8 % und pH 6,9 wurden 0,005 mol CaCl₂ und 800 FAU α-Amylase EC.3.2.1.1. aus Hausschweinpankreas zugegeben. Nach einer 3-stündigen Inkubation bei 40°C und anschließender Lagerung (24 h bei 8°C) war die Konzentration von β-Cyclodextrin im Eigelb 0,08 %.

### Beispiel 5

Es wurde, wie in Beispiel 4 beschrieben, 1 kg vorbehandeltes Eigelb mit 950 FAU eines α-Amylase-Rohpräparats aus Bacillus coagulans zusammengemischt. Nach einer 2-stündigen Inkubation bei 37°C war die Konzentration vom β-Cyclodextrin im Eigelb 0,1 %.

### Beispiel 6

Es wurde, wie in Beispiel 4 beschrieben, 1 kg vorbehandeltes Eigelb mit 1200 FAU eines Glucoamylase-Rohpräparats aus Flavobacterium sp. zusammengemischt und 1 Stunde inkubiert. Die Konzentration von β-Cyclodextrin im Eigelb ist auf 0,2 % gesunken.

## Patentansprüche

1. Verfahren zur Entfernung von β-Cyclodextrin aus Eigelb bzw. aus Eigelbplasma,
**dadurch gekennzeichnet**, daß man das zu behandelnde Material mit α-Amylase, ausgewählt aus den durch Mikroorganismen der Gruppe Aspergillus niger, Aspergillus oryzae, Bacillus polymyxa, Bacillus coagulans sowie Flavobacterium gebildeten oder abgeleiteten α-Amylasen oder Hausschwein-Pankreas-Amylase versetzt und inkubiert.

2. Verfahren nach Anspruch 1,
**dadurch gekennzeichnet,** daß das Eigelb bzw. Eigelbplasma in verdünnter wäßriger Lösung eingesetzt wird.

3. Verfahren nach Anspruch 2,
**dadurch gekennzeichnet**, daß pro kg Eigelb 0,1 bis 2 kg Wasser zugesetzt sind.

4. Verfahren nach einem der Ansprüche 1 bis 3,
**dadurch gekennzeichnet,** daß man den pH-Wert auf 4,5 bis 6,0 einstellt.

5. Verfahren nach einem der Ansprüche 1 bis 4,
**dadurch gekennzeichnet**, daß man die α-Amylase in einer Menge von 10 bis 500 FAU pro g zu entfernendes β-Cyclodextrin zusetzt.

6. Verfahren nach einem der Ansprüche 1 bis 5,
**dadurch gekennzeichnet,** daß man die Inkubation bei 5 bis 65°C durchführt.

7. Verfahren nach einem der Ansprüche 1 bis 6,
**dadurch gekennzeichnet,** daß man die Enzymbehandlung vor, während oder nach einer Pasteurisierung durchführt.

8. Verfahren nach einem der Ansprüche 1 bis 6,
**dadurch gekennzeichnet,** daß man die Inkubation während der Lagerung durchführt.

## Claims

1. Process for the removal of β-cyclodextrin from egg yolk or egg yolk plasma, characterised in that one mixes the material to be treated with α-amylase selected from the α-amylases formed by or derived from micro-organisms of the group Aspergillus niger, Aspergillus oryzae, Bacillus polymyxa, Bacillus coagulans, as well as Flavobacterium, or domestic hog pancreas amylase and incubates.

2. Process according to claim 1, characterised in that the egg yolk or egg yolk plasma is used in dilute aqueous solution.

3. Process according to claim 2, characterised in that 0.1 to 2 kg of water are added per kg of egg yolk.

4. Process according to one of claims 1 to 3, characterised in that one adjusts the pH value to 4.5 to 6.0.

5. Process according to one of claims 1 to 4, characterised in that one adds the α-amylase in an amount of 10 to 500 FAU per g of β-cyclodextrin to be removed.

6. Process according to one of claims 1 to 5, characterised in that one carries out the incubation at 5 to 65°C.

7. Process according to one of claims 1 to 6, characterised in that one carries out the enzyme treatment before, during or after a pasteurisation.

8. Process according to one of claims 1 to 6, characterised in that one carries out the incubation during the storage.

## Revendications

1. Procédé d'élimination de β-cyclodextrine du jaune d'oeuf ou du plasma de jaune d'oeuf, caractérisé en ce que l'on ajoute au produit à traiter une α-amylase choisie parmi les α-amylases produites par des microorganismes du groupe constitué par Aspergillus niger, Aspergillus oryzae, Bacillus polymyxa, Bacillus coagulans et Flavobacterium, ou qui en dérivent, ou une amylase de pancréas de porc domestique, et en ce qu'on le met à incuber avec cette amylase.

2. Procédé selon la revendication 1, caractérisé en ce que l'on introduit le jaune d'oeuf ou le plasma de jaune d'oeuf en solution aqueuse diluée.

3. Procédé selon la revendication 2, caractérisé en ce que l'on ajoute 0,1 à 2 kg d'eau par kg de jaune d'oeuf.

4. Procédé selon l'une des revendications 1 à 3, caractérisé en ce que l'on ajuste le pH à une valeur de 4,5 à 6,0.

5. Procédé selon l'une des revendications 1 à 4, caractérisé en ce que l'on ajoute l'α-amylase en une quantité de 10 à 500 UAF par g de β-cyclodextrine à éliminer.

6. Procédé selon l'une des revendications 1 à 5, caractérisé en ce que l'on effectue l'incubation à une température de 5 à 65°C.

7. Procédé selon l'une des revendications 1 à 6, caractérisé en ce que l'on effectue le traitement enzymatique avant, pendant ou après une pasteurisation.

8. Procédé selon l'une des revendications 1 à 6, caractérisé en ce que l'on effectue l'incubation pendant le stockage.
